# EUROPEAN PATENT SPECIFICATION

(11) **EP 0 903 002 B1**
(45) Date of publication and mention of the grant of the patent: **17.12.2003**
(21) Application number: 97925377.0
(22) Date of filing: 27.05.1997
(51) Int. Cl.: H02K 3/48, H02K 3/40, H02K 15/08

(54) **ROTATING ELECTRICAL MACHINE COMPRISING HIGH-VOLTAGE WINDING AND CAST COMPOUND SUPPORTING THE WINDING AND METHOD FOR MANUFACTURING SUCH MACHINE**
ROTIERENDE ELEKTRISCHE MASCHINE MIT HOCHSPANNUNGSWICKLUNG MIT HOCHSPANNUNGSWICKLUNG UND GIESSMASSE ZUR HALTERUNG DER WICKLUNG UND VERFAHREN ZUR HERSTELLUNG EINER SOLCHEN MASCHINE
MOTEUR ELECTRIQUE ROTATIF AVEC ENROULEMENT HAUTE TENSION ET COMPOSANT COULE SUPPORTANT L'ENROULEMENT, ET PROCEDE DE FABRICATION ASSOCIE

(30) Priority: 29.05.1996 SE 9602079; 03.02.1997 SE 9700361
(43) Date of publication of application: 24.03.1999
(73) Proprietor: ABB AB, 721 83 Västeras (SE)
(72) Inventor: LEIJON, Mats, S-723 35 Västeras (SE); BJÖRKLUND, Anders, S-723 48 Västeras (SE); HOLMSTRÖM, Göran, S-191 63 Sollentuna (SE); GÖRAN, Bengt, S-723 55 Västeras (SE); IMRELL, Anne-Marie, S-724 62 Västeras (SE); CARSTENSEN, Peter, S-141 42 Huddinge (SE); LARSSON, Bertil, S-724 76 Västeras (SE)
(74) Representative: Karlsson, Leif Karl Gunnar
(86) International application number: SE9700909
(87) International publication number: WO97045939

(56) References cited:
- EP-A- 0 571 155
- WO-A-92/01328
- FR-A- 2 708 157
- SE-B- 341 428
- US-A- 2 846 599
- US-A- 5 036 165

## Description

The present invention relates in a first aspect to a rotating electric machine of the type described in the preamble to claim 1, e.g. synchronous machines, normal synchronous machines as well as dual-fed machines, applications in asynchronous static current converter cascades, outerpole machines and synchronous flow machines.

A second aspect of the invention relates to a method of the type described in the preamble to claim 10.

In the present application the terms "radial", "axial" and "peripheral" constitute indications of direction defined in relation to the stator of the machine unless expressly stated otherwise. The term "cable lead-through" refers in the application to each individual length of the cable extending through a slot.

The machine is intended primarily as a generator in a power station for generating electric power. The machine is intended to be used at high voltages. High voltages shall be understood here to mean electric voltages in excess of 10 kV. A typical operating range for the machine according to the invention may be 36 to 800 kV.

Similar machines have conventionally been designed for voltages in the range 6-30 kV, and 30 kV has normally been considered to be an upper limit. This usually implies that a generator is to be connected to the power network via a transformer which steps up the voltage to the level of the power network, i.e. in the range of approximately 100-400 kV.

By using high-voltage insulated electric conductors, in the following termed cables, with solid insulation similar to that used in cables for transmitting electric power in the stator winding (e.g. XLPE cables) the voltage of the machine may be increased to such levels that it may be connected directly to the power network without an intermediate transformer. XLPE = Cross-linked polyethylene .

An example on such a type of cable is disclosed in US-A-5,0363,165. However, the use of the cable as winding in a rotating electric machine is not disclosed.

This concept generally implies that the slots in which the cables are placed in the stator be deeper than conventional technology (thicker insulation due to higher voltage and more turns in the winding) dictates. This entails new problems with regard to cooling, vibrations and natural frequencies in the region of the coil ends, teeth and winding.

Securing the cable in the slot is also a problem - the cable is to be inserted into the slot without its outer layer being damaged. The cable is subjected to currents having a frequency of 100 Hz which cause a tendency to vibration and, besides manufacturing tolerances with regard to the outer diameter, its dimensions will also vary with variations in temperature (i.e. load variations).

Although the predominant technology when supplying current to a high-voltage network for transmission, sub-transmission and distribution, is to insert a transformer between the generator and the power network as mentioned in the introduction, it is already known to endeavour to eliminate the transformer by generating the voltage directly at the level of the network. Such a generator is described in US-4 429 244, US-4 164 672 and US-3 743 867.

It is considered possible to manufacture coils for rotating machines with good results up to a voltage range of 10-20 kV.

Attempts at developing a generator for voltages higher than this have been in progress for some time, as is evident from "Electrical World", October 15 1932, pages 524-525, for instance. This describes how a generator designed by Parson 1929 was constructed for 33 kV. A generator in Langerbrugge, Belgium, is also described which produced a voltage of 36 kV. Although the article also speculates on the possibility of increasing the voltage levels, development of the concepts upon which these generators were based ceased. This was primarily due to deficiencies in the insulating system where several separate layers of varnish-impregnated mica foil and paper were used.

Certain attempts at lateral thinking in the design of synchronous generators are described in an article entitled "Water-and-oil-cooled Turbogenerator TVM-300" in J. Elektrotechnika, No. 1 1970, pages 6-8 of US 4,429,244 "Stator of generator" and in, Russian patent specification CCCP Patent 955369.

The water-and-oil-cooled synchronous machine described in J. Elektrotechnika is intended for voltages up to 20 kV. The article describes a new insulation system consisting of oil/paper insulation which enables the stator to be completely immersed in oil. The oil may then be used as coolant at the same time as constituting insulation. A dielectric oil-separating ring is provided at the internal surface of the core to prevent oil in the stator from leaking out towards the rocor. The stator winding is manufactured from conductors having oval, hollow shape, provided with oil and paper insulation. The coil sides with the insulation are retained in the slots with rectangular cross-section by means of wedges. Oil is used as coolant both in the hollow conductors and in cavities in the stator walls. However, such cooling systems necessitate a large number of connections for both oil and electricity at the coil ends. The thick insulation also results in increased radius of curvature of the conductors which in turn causes increased size of the coil overhang.

The above-mentioned US patent relates to the stator part of a synchronous machine comprising a magnetic core of laminated plate with trapezoid slots for the stator winding. The slots are stepped since the need for insulation of the stator winding is less in towards the rotor where the part of the winding located closest to the neutral point is situated. The stator part also includes a dielectric oil-separating cylinder nearest to the inner surface of the core. This part could increase the excitation requirement in comparison with a machine lacking this ring. The stator winding is manufactured from oil-saturated cables having the same diameter for each layer of the coil. The layers are separated from each other by means of spacers in the slots and secured with wedges. Characteristic of the winding is that it consists of two "half-windings" connected in series. One of the two half-windings is situated centrally inside an insulating sheath. The conductors of the stator winding are cooled by surrounding oil. A drawback with so much oil in the system is the risk of leakage and the extensive cleaning-up process which may result from a faulty condition. The parts of the insulating sheath located outside the slots have a cylindrical part and a conical screening electrode whose task it is to control the electrical field strength in the area where the cable leaves the plate.

It is evident from CCCP 955369 that in another attempt at increasing the rated voltage of a synchronous machine, the oil-cooled stator winding consists of a conductor with insulation for medium-high voltage, having the same dimension for all layers. The conductor is placed in stator slots in the shape of circular, radially situated openings corresponding to the cross-sectional area of the conductor and the necessary space required for fixation and cooling. The various radially located layers of the winding are surrounded and fixed in insulating tubes. Insulating spacer elements fix the tubes in the stator slot. In view of the oil cooling. an inner dielectric ring is also required here to seal the oil coolant from the inner air gap. The illustrated construction shows no stepping of either insulation or stator slots. The construction shows an extremely narrow, radial waist between the various stator slots, entailing a large slot leakage flow which greatly affects the excitation requirements of the machine.

In A report from the Electric Power Research Institute, EPRI, EL-3391, from April 1984 an exposition is given of the generator concept in which a higher voltage in an electric generator is achieved with the object of connecting such a generator to a power network without intermediate transformers. The report deems such a solution profitable in its being effective and financially advantageous . The main reason that it was considered possible in 1984 to start developing generators for direct connection to the power network was that by that time a superconducting rotor had been developed. The considerable excitation capacity of the superconducting field makes it possible to use air-gap windings with sufficient thickness to withstand the electric stresses.

By combining the construction of an excitation circuit, the most promising concept of this project, with winding, a so-called "monolith cylinder armature", a concept in which two cylinders of conductors are enclosed in three cylinders of insulation and the whole structure is attached to an iron core without teeth, it was deemed that a rotating electric machine for high voltage could be directly connected to a power network. This solution implies that the main insulation is to be made sufficiently thick to withstand network-to-network and network-to-earth potentials. Besides it requiring a superaconducting rotor, an obvious drawback with the proposed solution is that it requires a very thick insulation, thus increasing the size of the machine. The coil ends must be insulated and cooled with oil or freones in order to direct the large electric fields into the ends. The whole machine is to be hermetically enclosed to prevent the liquid dielectric medium from absorbing moisture from the atmosphere.

The present invention is related to the above-mentioned problems associated with avoiding damage to the surface of the cable upon insertion into the stator slots and avoiding wear against the surface caused by vibration during operation. The slot through which the cable is inserted is relatively uneven or rough since in practice it is extremely difficult to control the position of the laminated plates sufficiently exactly to obtain a perfectly uniform surface. The rough surface has sharp edges which may shave off parts of the semiconductor layer surrounding the cable. This leads to corona and break-through at operating voltage.

When the cable is placed in the slot and adequately clamped there is no risk of damage during operation. Adequate clamping implies that forces exerted (primarily radially acting current forces with double mains frequency) do not cause vibrations that cause wear on the semiconductor surface. The outer semiconductor is to thus be protected against mechanical damage during operation.

During operation the cable is also subjected to thermal loading so that the XLPE material expands. The diameter of a 145 kV XLPE cable, for instance, increases by about 1.5 mm at an increase in temperature from 20 to 70°. The cable must therefore be allowed the necessary space due to thermal expansion.

Against this background the object of the present invention is to solve the problems associated with achieving a machine of the type under consideration so that the cable is not subjected to mechanical damage during operation as a result of vibrations, and which permits thermal expansion of the cable. Achieving this would enable the use of cables that do not have a mechanically protecting outer layer. In such a case the outer layer of the cable would consist of a thin semiconductor material which is sensitive to mechanical damage.

According to a first aspect of the invention this has been solved by giving a machine, of the type described in the preamble to claim 1, the special features defined in the characterizing part of this claim.

Thanks to the casting compound, the high-voltage cable will be secured along its length so that the vibration problems are reduced. It can then be ensured that the vibrations do not generate natural frequencies in certain critical frequency ranges. Natural frequencies of 100 Hz should particularly be avoided.

Thanks to the specially designed solid insulation, the machine may be used for very high voltages.

According to a preferred embodiment of the invention at least one semiconducting layer has a coefficient of thermal expansion equivalent to that of the intermediate solid insulation. Defects, cracks and the like are thus avoided upon thermal movement of the cable.

The invention is primarily intended for use with, and its advantages become particularly apparent in connection with, a high-voltage cable built up of an inner core having a plurality of strand parts, an inner semiconducting layer, an insulating layer surrounding this and an outer semiconducting layer surrounding the latter, a cable in particular having a diameter of 20-200 mm and a conducting area of 40-3000 mm².

With such cables the application thus constitutes preferred embodiments of the invention.

In a preferred embodiment of the invention the casting compound is resilient. It may thereby allow space for the thermal expansion of the cable during operation, without the compound being plastically deformed.

In an efficient embodiment, expedient from the manufacturing point of view, resilience is achieved by the compound containing gas bubbles.

In a preferred embodiment the compound consists of silicon or polyurethane compound which have properties suitable for the purpose of elasticity and of being able to produce pores.

The slots should be provided with sealing members at one or both end surfaces of the stator in order to prevent the casting compound from leaking out before it has solidified.

The above and other advantageous embodiments of the machine according to the invention are defined in the sub-claims to claim 1.

In a second aspect of the invention the purpose is achieved by giving a method of the type described in the preamble to claim 10 the special features defined in the characterizing part of this claim. The method expediently enables the achievement of the desired casting compound around the cables in the slots.

According to a preferred embodiment of the invention a casting compound is introduced that has the property of solidifying after a while, preferably while producing gas pores. A desired elasticity can thus easily be achieved in the casting compound.

In a preferred embodiment the slots are also provided with sealing members arranged at the end surfaces of the stator. The risk is therefore avoided of the compound leaking out axially during insertion.

In another preferred embodiment the compound is injected into each slot through a radial injection opening into the inwardly directed sheath surface, communicating with a radial duct that communicates with the slot.

The above and other advantageous embodiments of the method according to the invention are defined in the sub-claims to claim 10.

The invention will be explained in more detail in the following description of preferred embodiments, with reference to the accompanying drawings in which;
Figure 1 shows schematically an end view of a sector of the stator in a machine according to the invention,
Figure 2 shows a cross-section through a cable used in the machine according to the invention,
Figure 3 shows a radial section through a detail of the stator in a machine according to the invention,
Figure 4 shows a partial section along the line IV-IV in Figure 3.

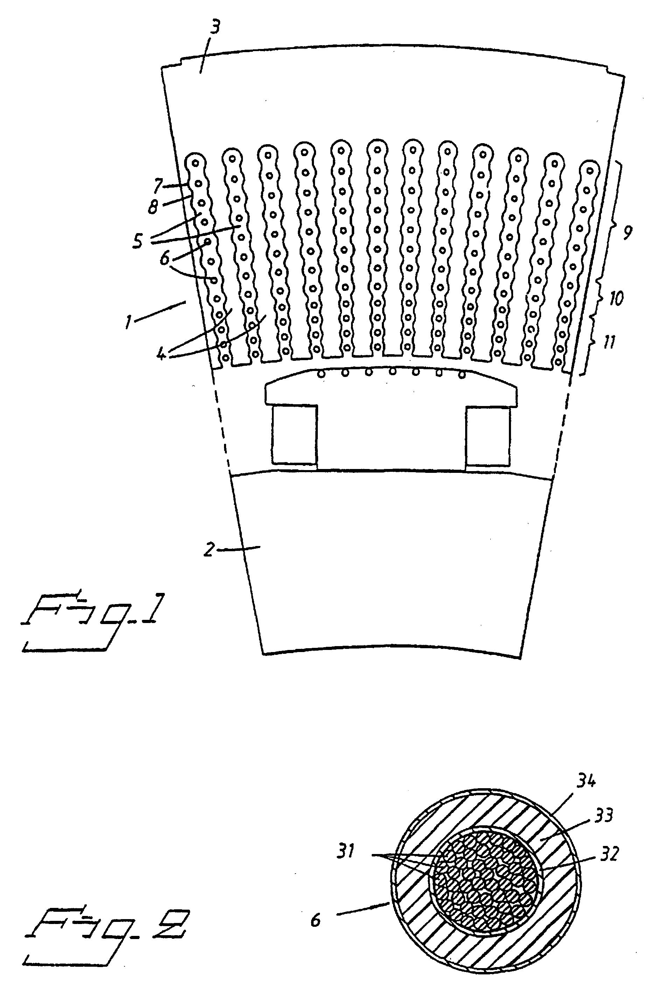

In the axial view shown schematically in Figure 1 through a sector of the stator 1 of the machine, its rotor is designated 2. The stator is composed in conventional manner of a laminated core of sheet steel. The figure shows a sector of the machine, corresponding to one pole division. From a yoke portion 3 of the core situated radially outermost, a number of teeth 4 extend radially in towards the rotor 2 and are separated by slots 5 in which the stator winding is arranged. The cables 6 in the windings are high-voltage cables which may be of substantially the same type as high-voltage cables used for power distribution, so-called XLPE cables. One difference is that the outer mechanically protective sheath and the metal screen that normally surround such a cable have been eliminated. The cable thus comprises only the conductor, an inner semiconducting layer, an insulating layer and an outer semiconducting layer. The semiconducting layer, sensitive to mechanical damage, is thus exposed on the surface of the cable.

In the drawings the cables 6 are illustrated schematically, only the conducting central part of the cable lead-through or coil side being filled in. As can be seen, each slot 5 has varying cross section with alternating wide parts 7 and narrow parts 8. The wide parts 7 are substantially circular and surround cable lead-throughs, and the waist parts between these form narrow parts 8. The waist parts serve to radially position each cable lead-through. The cross-section of the slot as a whole also becomes slightly narrower in radial direction inwards. This is because the voltage in the cable lead-throughs is lower the closer they are situated to the radially inner part of the stator. Slimmer cable lead-throughs can therefore be used here, whereas increasingly coarser cable lead-throughs are required further out. In the example illustrated cables of three different dimensions are used, arranged in three correspondingly dimensioned sections 9. 10, 11 of the slots 5.

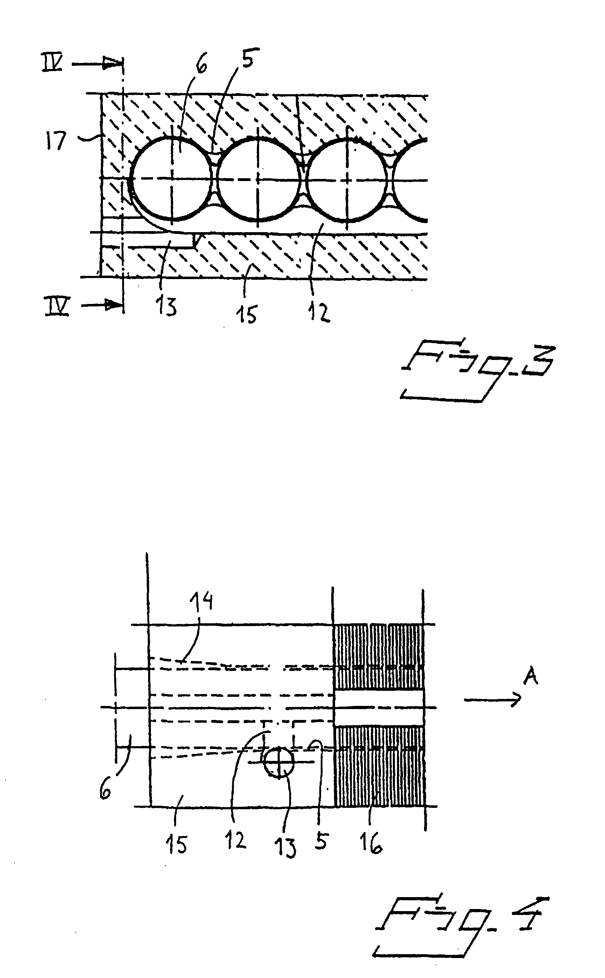

Figure 2 shows a cross-sectional view of a high-voltage cable 6 according to the present invention. The high-voltage cable 6 comprises a number of strand parts 31 made of copper (Cu), for instance, and having circular cross-section. These strand parts 31 are arranged in the middle of the high-voltage cable 6. Around the strand parts 31 is a first semiconducting layer 32. Around the first semiconducting layer 32 is an insulating layer 33, e.g. XLPE insulation. Around the insulating layer 33 is a second semiconducting layer 34. The concept "high-voltage cable" in the present application thus need not include the metal screen and the outer protective sheath that normally surround such a cable for power distribution.

Figure 3 is a radial section through the radially inner part of a slot, the section being taken through one end plate 15 of the stator. A channel 12 runs along one wall of the slot 5 in the end plate. It extends along the whole radial extension of the slot and is open towards the slot so that it communicates with all the intermediate spaces formed between the cable lead-throughs. The slot 5 and channels 12 are filled with foamed silicon or polyurethane compound in which the gas pores take up approximately 50-60 % of the volume of the compound. The cable 6 is thus firmly secured in the slot 5 and its thermal expansion may be absorbed by the compound which, thanks to the pores, is resilient.

Figure 4 is a section along the line IV-IV in Figure 3, through its end plate 15 and the adjacent part of the laminated stack 16.

As can be seen in Figure 4, the slot 5 is provided with a sealing member 14 sealing around the cables 6 as they leave the stator. A radial bore 13 is formed in the end plate 15 which bore communicates with the channel 12 and opens into the inwardly directed sheath surface 17 of the stator.

Casting compound is injected in fluid or semi-fluid state through the radial bore 13 and via this out into the radial duct 12.

The radial duct 12 distributes the casting compound to all the cable lead-throughs in the slot and the casting compound flows axially from the duct 12 in the direction of the arrow A along the cables to fill the whole axial extension of the slot. The casting compound is prevented from leaking out by the sealing member 14 and a sealing member arranged similarly in the end plate at the other end of the stator. when the slot is filled with casting compound this is allowed to solidify, whereupon gas bubbles are formed giving it the desired elasticity.

## Claims

1. A rotating electric machine comprising a stator with windings (6) drawn through slots (5) in the stator (1), **characterized in that** at least one winding (6) comprises a high-voltage cable with an insulation system comprising at least two semiconducting layers (32, 34), each layer essentially constituting an equipotential surface, and also including solid insulation (33) between these layers (32, 34), and **in that** the slots (5) are at least partially filled with casting compound.

2. A machine as claimed in claim 1, wherein at least one of said layers (32, 34) has substantially the same coefficient of thermal expansion as the solid insulation (33).

3. A rotating electric machine as claimed in claim 1 or claim 2, wherein the cable (6) is of a type comprising a core with a plurality of strand parts (31), a semiconducting layer (32) surrounding the core, an insulating layer (33) surrounding the inner semiconducting layer, and an outer semiconducting layer (34) surrounding the insulating layer (33).

4. A rotating electric machine as claimed in any of claims 1-3, wherein the cable (6) has a diameter within the range of 20-200 mm and a conducting area within the range of 40-3000 mm².

5. A rotating electric machine as claimed in any of claims 1-4, wherein said casting compound is resilient.

6. A rotating electric machine as claimed in claim 5, wherein the casting compound contains gas bubbles in order to achieve said resilience.

7. A rotating electric machine as claimed in claim 6, wherein the gas bubbles constitute 40-70 %, preferably 50-60 % of the total volume of the casting compound.

8. A rotating electric machine as claimed in any of claims 1-7, wherein the casting compound consists of a silicon or polyurethane compound.

9. A rotating electric machine as claimed in any of claims 1-8, wherein at at least one end surface of the stator (1) the slots (5) are provided with sealing members (14).

10. A method when manufacturing a rotating electric machine of the type claimed in claim 1, **characterized in that** the stator is wound with high-voltage cable and that thereafter a casting compound is introduced into the slots in fluid or semi-fluid state.

11. A method as claimed in claim 10, wherein the compound is caused to solidify after it has been introduced into the slots (5).

12. A method as claimed in 11, wherein the compound is caused to solidify while at the same time gas bubbles are formed therein.

13. A method as claimed in any of claims 10-12, wherein sealing members are applied in the slots (5) at at least one end surface of the stator (1).

14. A method as claimed in claim 13, wherein the sealing members are applied before the stator (1) is wound.

15. A method as claimed in any of claims 10-14, wherein the compound is inserted through at least one radial duct (12) arranged close to one wall of each slot (5) and communicating with the slot (5).

16. A method as claimed in claim 15, wherein said radial ducts (12) are arranged in an end plate (15) on the stator (1).

17. A method as claimed in claim 16 or claim 17, wherein the compound is inserted through a radial injection opening (13) emerging into the inwardly directed sheath surface of the stator (1), said opening (13) communicating with said duct (12).

## Patentansprüche

1. Rotierende elektrische Maschine, die einen Stator mit durch Schlitze (5) in dem Stator (1) gezogenen Wicklungen (6) aufweist, **dadurch gekennzeichnet, dass** mindestens eine Wicklung (6) ein Hochspannungskabel mit einem Isoliersystem aufweist, das mindestens zwei Halbleiterschichten (32, 34) umfasst, wobei jede Schicht im Wesentlichen eine Äquipotentialfläche bildet, und ebenso eine feste Isolierung (33) zwischen diesen Schichten (32, 34) aufweist, und dass die Schlitze (5) zumindest teilweise mit Vergussmasse gefüllt sind.

2. Maschine nach Anspruch 1, **dadurch gekennzeichnet, dass** mindestens eine dieser Schichten (32, 34) im Wesentlichen den selben Wärmeausdehnungskoeffizienten wie die feste Isolierung (33) aufweist.

3. Rotierende elektrische Maschine nach Anspruch 1 oder 2, **dadurch gekennzeichnet, dass** das Kabel (6) von der Art ist, die einen Kern mit einer Vielzahl von Litzenteilen (31), eine Halbleiterschicht (32) um den Kern, eine Isolierschicht (33) um die innere Halbeiterschicht, und eine äußere Halbleiterschicht (34) um die Isolierschicht (33) aufweist.

4. Rotierende elektrische Maschine nach einem der Ansprüche 1 bis 3, **dadurch gekennzeichnet, dass** das Kabel (6) einen Durchmesser im Bereich von 20 bis 200 mm und eine leitende Oberfläche im Bereich von 40 bis 3000 mm² aufweist.

5. Rotierende elektrische Maschine nach einem der Ansprüche 1 bis 4, **dadurch gekennzeichnet, dass** die Vergussmasse elastisch ist.

6. Rotierende elektrische Maschine nach Anspruch 5, **dadurch gekennzeichnet, dass** die Vergussmasse Gasblasen enthält, um die Elastizität zu erreichen.

7. Rotierende elektrische Maschine nach Anspruch 6, **dadurch gekennzeichnet, dass** die Gasblasen 40 bis 70 %, vorzugsweise 50 bis 60 % des Gesamtvolumens der Vergussmasse ausmachen.

8. Rotierende elektrische Maschine nach einem der Ansprüche 1 bis 7, **dadurch gekennzeichnet, dass** die Vergussmasse aus einer Silikon- oder Polyurethan-Verbindung besteht.

9. Rotierende elektrische Maschine nach einem der Ansprüche 1 bis 8, **dadurch gekennzeichnet, dass** an mindestens einer Endoberfläche des Stators (1) die Schlitze (5) mit Dichtungselementen (14) versehen sind.

10. Verfahren beim Herstellen einer rotierenden elektrischen Maschine der in Anspruch 1 beanspruchten Art, **dadurch gekennzeichnet, dass** der Stator mit einem Hochspannungskabel gewickelt wird und dass anschließend eine Vergussmasse in flüssigem oder zähflüssigem Zustand in die Schlitze eingebracht wird.

11. Verfahren nach Anspruch 10, **dadurch gekennzeichnet, dass** die Masse nach dem Einbringen in die Schlitze (5) ausgehärtet wird.

12. Verfahren nach Anspruch 11, **dadurch gekennzeichnet, dass** die Masse ausgehärtet wird, während gleichzeitig Gasblasen darin gebildet werden.

13. Verfahren nach einem der Ansprüche 10 bis 12, **dadurch gekennzeichnet, dass** Dichtungselemente in den Schlitzen (5) an mindestens einer Endoberfläche des Stators (1) angebracht werden.

14. Verfahren nach Anspruch 13, **dadurch gekennzeichnet, dass** die Dichtungselemente angebracht werden, bevor der Stator (1) gewickelt wird.

15. Verfahren nach einem der Ansprüche 10 bis 14, **dadurch gekennzeichnet, dass** die Masse durch mindestens einen radialen Kanal (12) eingebracht wird, der nahe einer Wand jedes Schlitzes (5) angeordnet ist und mit dem Schlitz (5) in Verbindung steht.

16. Verfahren nach Anspruch 15, **dadurch gekennzeichnet, dass** die radialen Kanäle (12) in einer Endplatte (15) auf dem Stator (1) angeordnet sind.

17. Verfahren nach Anspruch 16 oder 17, **dadurch gekennzeichnet, dass** die Masse durch eine radiale Einspritzöffnung (13) eingebracht wird, die in die nach innen gerichtete Gehäuseoberfläche des Stators (1) führt, wobei die Öffnung (13) mit dem Kanal (12) in Verbindung steht.

## Revendications

1. Machine électrique rotative comprenant un stator avec des enroulements (6) passant par des fentes (5) du stator (1), **caractérisée en ce que** au moins un enroulement (6) comprend un câble pour haute tension avec un système d'isolation comportant au moins deux couches semi-conductrices (32, 34), chaque couche constituant sensiblement une surface d'équipotentiel, et comprend également un isolant solide (33) entre ces couches (32, 34), et **en ce que** les fentes (5) sont au moins partiellement remplies d'un composé coulé.

2. Machine selon la revendication 1, dans laquelle l'une ou moins desdites couches (32, 34) a sensiblement le même coefficient de dilatation thermique que l'isolant solide (33).

3. Machine électrique rotative selon la revendication 1 ou 2, dans laquelle le câble (6) est du type comprenant un conducteur avec une pluralité de brins (31), une couche semi-conductrice (32) entourant le conducteur, une couche isolante (33) entourant la couche semi-conductrice intérieure et une couche semi-conductrice extérieure (34) entourant la couche isolante (33).

4. Machine électrique rotative selon l'une ou l'ensemble de revendications 1 à 3, dans laquelle le câble (6) a un diamètre compris entre 20 et 200 mm et une surface conductrice comprise entre 40 et 3000 mm².

5. Machine électrique rotative selon l'une ou l'ensemble de revendications 1 à 4, dans laquelle ledit composé coulé est élastique.

6. Machine électrique rotative selon la revendication 5, dans laquelle le composé coulé contient des bulles de gaz afin d'obtenir ladite élasticité.

7. Machine électrique rotative selon la revendication 6, dans laquelle les bulles de gaz constituent entre 40 et 70 %, de préférence entre 50 et 60 % du volume total de composé coulé.

8. Machine électrique rotative selon l'une ou l'ensemble de revendications 1 à 7, dans laquelle le composé coulé est un composé de silicone ou de polyuréthane.

9. Machine électrique rotative selon l'une ou l'ensemble de revendications 1 à 8, dans laquelle sur au moins une surface d'extrémité du stator (1), les fentes (5) sont pourvues d'éléments d'étanchéité (14).

10. Procédé de fabrication d'une machine électrique rotative selon la revendication 1, **caractérisé en ce que** le stator est enroulé avec du câble pour haute tension et en qu'un composé coulé est ensuite introduit dans les fentes à l'état liquide ou semi-liquide.

11. Procédé selon la revendication 10, dans lequel le composé est amené à se solidifier après avoir été introduit dans les fentes (5).

12. Procédé selon la revendication 11, dans lequel le composé est amené à se solidifier en même temps que des bulles de gaz sont formées à l'intérieur.

13. Procédé selon l'une ou l'ensemble des revendications 10 à 12, dans lequel les éléments d'étanchéité sont appliqués dans les tentes (5) sur au moins une surface d'extrémité du stator (1).

14. Procédé selon la revendication 13, dans lequel les éléments d'étanchéité sont appliqués avant l'enroulement du stator (1).

15. Procédé selon l'une ou l'ensemble des revendications 10 à 14, dans lequel le composé est introduit à travers au moins une conduite radiale (12) disposée à proximité d'une paroi de chaque fente (5) et communiquant avec la fente (5).

16. Procédé selon la revendication 15, dans lequel lesdites conduites radiales (12) sont disposées dans une plaque d'extrémité (15) du stator (1).

17. Procédé selon la revendication 16 ou 17, **caractérisé en ce que** le composé est introduit à travers une ouverture d'injection radiale (13) débouchant dans la surface de gaine du stator (1) orientée vers l'intérieur, ladite ouverture (13) communiquant avec ladite conduite (12).
